## Europäisches Patentamt

## European Patent Office

## Office européen des brevets

(19)

(11) Numéro de publication: **0 242 486**
**B1**

(12) **FASCICULE DE BREVET EUROPEEN**

(45) Date de publication du fascicule du brevet: **13.06.90**

(51) Int. Cl.⁵: **F 16 B 37/04**

(21) Numéro de dépôt: **86400842.0**

(22) Date de dépôt: **18.04.86**

(54) Dispositif de fixation.

(30) Priorité: **19.04.86 FR 8505974**

(43) Date de publication de la demande:
**28.10.87 Bulletin 87/44**

(45) Mention de la délivrance du brevet:
**13.06.90 Bulletin 90/24**

(84) Etats contractants désignés:
**BE DE GB IT**

(56) Documents cités:
**DE-A-2 418 124**
**US-A-2 159 573**
**US-A-2 853 113**
**US-A-2 883 011**
**US-A-4 506 419**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Tessier, Pascal**
**103 bis, Avenue Michel Bizot**
**F-75012 Paris (FR)**
Inventeur: **Bettray, Guy**
**15, boulevard Lefebvre**
**F-75015 Paris (FR)**

(74) Mandataire: **Chassagnon, Jean-Alain et al**
**REGIE NATIONALE DES USINES RENAULT (S.0267)**
**F-92109 Boulogne-Billancourt Cédex09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

L'invention est relative à un dispositif de fixation d'un élément à fixer sur un élément support, et qui comprend une ou plusieurs cages coulissantes qui viennent se monter sur l'élément support à l'aide de moyens de blocage; afin que la ou lesdites cages coulissantes puissent recevoir l'élément à fixer la mise en place sera assurée par lesdits moyens de blocage. Ce dispositif de fixation, selon l'invention, permet de régler dans deux directions perpendiculaires lélément à fixer avant son blocage définitif.

On connaît de nombreux systèmes ou dispositifs de fixation qui permettent de régler dans deux directions perpendiculaires un élément à fixer sur un élément support. On peut citer notamment l'utilisation des boulons qui se débattent dans des trous oblongs comme c'est le cas du document US—A 2 883 011. Ce document décrit un arrangement d'un élément à fixer sur un élément support, comprenant un cage coulissante qui vient se fixer dans une boutonnière oblongue dudit élément support par l'intermédiaire d'un moyen de blocage solidaire de ladite cage coulissante, afin que ladite cage coulissante puise se déplacer dans le sens longitudinal de ladite boutonnière oblongue; ladite cage coulissante ayant une pince. Le montage de l'écrou se fait après assemblage. Ce type de dispositif présente notamment l'inconvénient de nécessiter la tenue des têtes de vis lors du blocage des boulons. Ceci est particulièrement gênant notamment dans l'industrie automobile pour les montages en chaîne, où l'appréhension des têtes des vis est délicate et souvent inaccessible. Ceci entraîne l'utilisation d'outillages spécifiques et coûteux qui de plus augmente les temps de montage.

Le but de la présente invention est de proposer un dispositif de fixation qui utilise une ou plusieurs cages coulissantes destinées à recevoir la ou les vis de blocage. Ces cages coulissantes sont montées sur l'élément support et reçoivent l'élément à fixer; les têtes de vis étant immobilisées dans lesdites cages coulissantes, afin d'assurer le blocage de l'ensemble sans faire appel à un dispositif spécial de tenue des vis.

Selon l'invention, le dispositif de fixation de l'élément é fixer sur un élément support comprend au moins une cage coulissante, qui vient se fixer dand une boutonnière rectangulaire dudit élément support par l'intermédiaire d'un moyen de blocage solidaire de ladite cage coulissante afin que ladite cage coulissante paisse se déplacer dans le sens longitudinal de ladite boutonnière rectangulaire. De plus la cage coulissante comporte une pince qui reçoit l'élément à fixer, qui est lui-même muni d'une échancrure perpendiculaire à la boutonnière rectangulaire. Cette échancrure coopère avec le moyen de blocage, afin de permettre le déplacement dudit élément à fixer dans le sens longitudinal de l'échancrure. Le moyen de blocage est une vis avec un écrou à embase, ladite vis ayant une tête cylindrique munie de deux tétons, quo coopèrent avec la cage coulissante; lesdits tétons ayant des dimensions suffisantes pour venir s'appliquer sur l'élément support, après franchissement de la boutonnière rectangulaire, et rotation d'un quart de tour.

La cage coulissante comporte:

ladite pince, qui est constituée d'une semelle et d'un élément élastique liés l'un à l'autre par un coude; ledit élément élastique ayant une lumière de passage;

une cage qui est montée sur la semelle et qui reçoit la tête cylindrique de la vis de blocage.

La cage comporte deux montants qui ont des parois internes cylindriques et qui sont reliées par un fond, afin de constituer deux ouvertures. Ce fond comporte des oreillettes souples. La semelle a une lumière avex deux encoches rectangulaires, qui prolongent les deux ouvertures correspondantes de la cage. Chaque encoche rectangulaire a une partie en biseau.

De plus, chacun des montants de la cage comporte une butée de détrompage.

L'élément élastique de la pince de la cage coulissante se prolonge par une extrémité recourbée, afin de constituer une arête de pincement.

Selon un mode de réalisation de l'invention, l'élément élastique comporte une lumière de passage de l'écrou de la vis de blocage. Selon différentes variantes de l'invention, cette lumière de passage peut avoir une forme rectangulaire débouchante, une forme rectangulaire fermée, ou enfin un contour qui comporte une partie cylindrique avec deux encoches diamètralement opposées.

L'invention présente ainsi l'avantage de permettre un montage en aveugle sans recourir à des outillages spécifiques et encombrants, qui peuvent poser des problèmes délicats lors du montage en série dans la construction automobile. De plus, les deux réglages possibles offerts par l'invention permettent une mise en place exacte et rapide de l'élément à fixer.

L'invention sera mieux comprise par l'étude d'un mode de réalisation particulier décrit à titre nullement limitatif et illustré par les dessins annexés, sur lesquels:

la figure 1 est une vue en perspective éclatée du dispositif de fixation selon l'invention,

la figure 2 est une vue en perspective de la cage coulissante selon l'invention, cette cage étant associée à la vis de blocage correspondant à la figure 1,

la figure 3 est une vue de face du dispositif selon l'invention, lors de la présentation de l'élément à fixer,

la figure 4 est une vue de face correspondant à la figure 3, après le premier réglage de l'élément à fixer,

la figure 5 est une vue de face correspondant à la figure 3, après le deuxième réglage de l'élément à fixer,

la figure 6 est une coupe longitudinale de la cage coulissante selon l'invention,

la figure 7 est une vue de dessus de la figure 6,

la figure 8 est une vue de dessus de la cage coulissante selon un autre mode de réalisation de l'invention,

la figure 9 est une vue de dessus de la cage coulissante selon un autre mode de réalisation de l'invention.

Le dispositif de fixation, selon l'invention, est destiné à immobiliser un élément à fixer 1 sur un élément support 2. L'élément support 2 comporte une ou plusieurs boutonniéres rectangulaires 8, qui sont destinées à recevoir chacune une cage coulissante droite. L'élément à fixer 1 comporte des échancrures 6 dont la position correspond aux boutonnières rectangulaires 8 de l'élément support 2, afin de permettre d'engager ledit élément à fixer 1 dans les cages coulissantes 3. Chacune des cages coulissantes 3 reçoit une vis 4 munie d'un écrou à embase 5 pour assurer le blocage de l'ensemble du dispositif. Chaque échancrure 6 se termine par une partie demi-circulaire 7. L'axe longitudinal de chacune des échancrures 6 est perpendiculaire à l'axe longitudinal de la boutonnière rectangulaire 8 correspondante.

Chacune des cages coulissantes 3 est constituée d'une pince 9 et d'une cage 10. La pince 9 est formée d'une semelle 11, qui est liée à un élément élastique 13 par un coude 12.

La semelle 11 porte la cage 10, et l'élément élastique 13 se prolonge par une extrémité 14 de pente contraire, afin de constituer une arête de pincement 15. Cette arête 15 est la ligne de pression de la pince 9 sur l'élément à fixer 1. De plus l'élément élastique 13 comporte une lumière de passage, afin de permettre le montage de la vis 4 et de l'écrou à embase 5.

Le cage 10 est constituée par deux montants 16 qui ont des parois internes cylindriques 21. Ces montants 16 sont reliés par un fond 29 afin de constituer 2 ouvertures diamètralement opposées 19. Le fond 29 est constitué par 4 oreillettes souples 17. Les deux montants 16 possèdent des méplats 32, qui permettent à la cage coulissante 3 de se déplacer facilement dans la boutonnière rectangulaire 8. De plus ces montants 16 ont une base extérieure cylindrique 33 dont le diamètre est très légèrement inférieur à la largeur de la boutonnière rectangulaire 8. On peut anisi engager facilement la cage 10 dans la boutonnière rectangulaire 8, et la faire tourner d'un quart de tour. Le mouvement de rotation est limité par la présence de deux butées de détrompage 18 qui sont diamétralement opposées et aménagées sur la base extérieure cylindrique 33. Ces butées de détrompage 18 autorisent de plus la rotation de la cage coulissante 3 dans un seul sens, et elles évitent ainsi toute fausse manoeuvre.

La semelle 11 comporte une lumière 20 qui est munie de deux encoches rectangulaires 22. Ces deux encoches rectangulaires 22 prolongent les deux ouvertures 19 correspondantes et elles ont la même largeur que ces ouvertures 19. De plus chaque encoche rectangulaire 22 a une partie en biseau 23. La cage 10 qui est destinée à recevoir la vis 4 a une forme qui coopére avec la forme de la tête de cette vis. Pour cela, la vis 4 a une tête cylindrique 24 qui comporte deux tétons diamètralement opposés 25. Ces tétons ont des largeurs légèrement inférieures aux largeurs des encoches rectangulaires 22 de la lumière 20.

De plus, l'encombrement extérieur diamétral de ces deux tétons est légèrement supérieur à l'encombrement diamétral des deux encoches rectangulaires 22. De plus, les parois internes cylindriques 21 de la cage 1 ont un diamétre légèrement supérieur au diamétre de la tête cylindrique 24 de la vis 4.

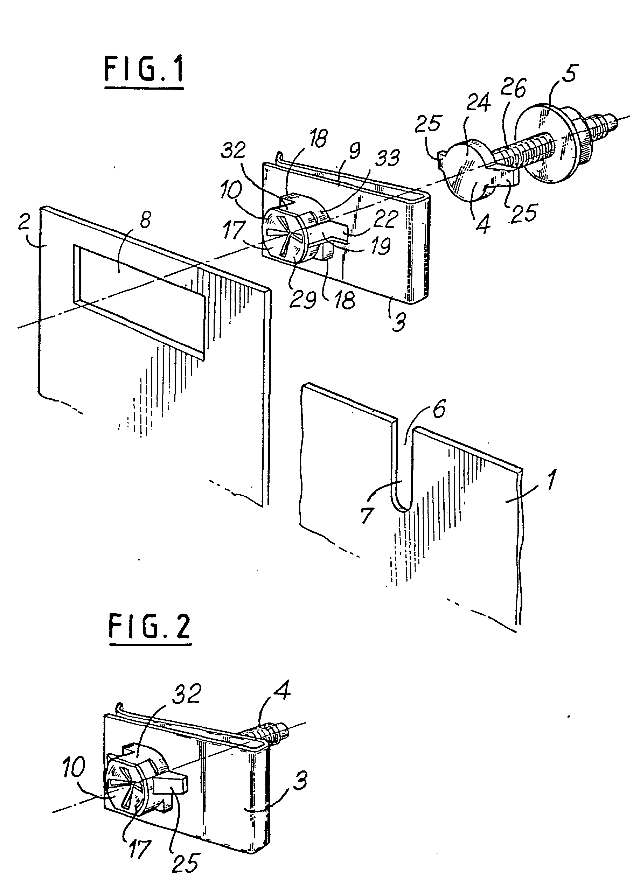

Pour monter la vis 4 dans la cage coulissante 3 il suffit de présenter cette vis 4 comme il est indiqué sur la figure 1, c'est-à-dire avec les tétons 25 en face des encoches rectangulaires 22. Puis on incline légèrement la vis afin d'engager l'un des deux tétons 25 dans l'encoche rectangulaire 22 correspondante. On ramène alors l'axe de la vis 4 dans l'axe de la cage 10 en franchissant le point dur représenté par l'autre encoche rectangulaire 22 avec le tétons 25 correspondant. La vis 4 est alors prisonnière dans la cage coulissante 3. En effet, les oreillettes souples 17 plaquent la tête cylindrique 24 qui vient s'appliquer au moyen de ces tétons 25 sur la semelle 11. La vis 4 est donc parfaitement fixée dans la cage coulissante 3 à la fois dans le sens axial et en rotation. De plus il faut remarquer que les tétons 25 doivent avoir un encombrement diamétral qui soit plus grand que la largeur de la boutonnière rectangulaire 8, de manière que lorsque la cage coulissante 3 sera montée sur l'élément support 2, et qu'après la rotation d'un quart de tour les deux tétons 25 puissent venir s'appliquer sur la face de l'élément support 2.

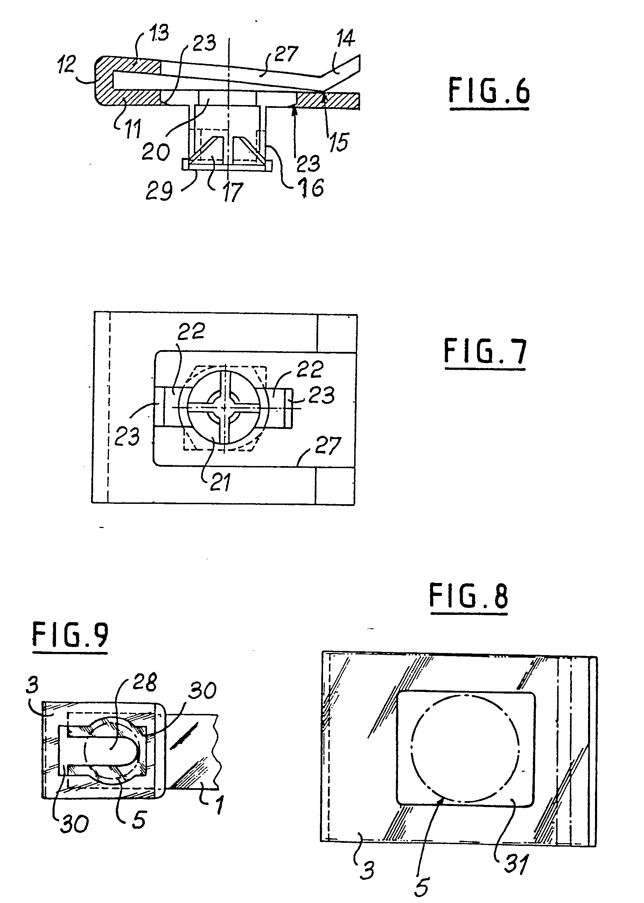

Comme il a déjà été précédemment indiqué l'élément élastique 13 de la cage coulissante 3 comporte une lumière de passage permettant l'introduction de la vis 4 avec son écrou à embase 5. Les figures 6, 7, 8 et 9 montrent différents modes de réalisation de cette lumière de passage selon l'invention. Dans les figures 6 et 7 la cage coulissante 3 possède une lumière 27 qui est débouchante et qui a une forme rectangulaire dont les dimensions doivent permettre le passage de l'embase de l'écrou 5. Dans le cas du mode de réalisation de la figure 8, l'élément élastique 13 possède une lumière 31 qui est de forme rectangulaire et dont les dimensions permettent également le passage de l'écrou à embase 5. Enfin, dans le cas de la figure 9, l'élément élastique 13 possède une lumière 28 qui comporte une forme circulaire respectant l'encombrement maximal de l'écrou à embase 5, cette partie circulaire comportant deux lumières axiales 30 qui peuvent être de longueur inégale.

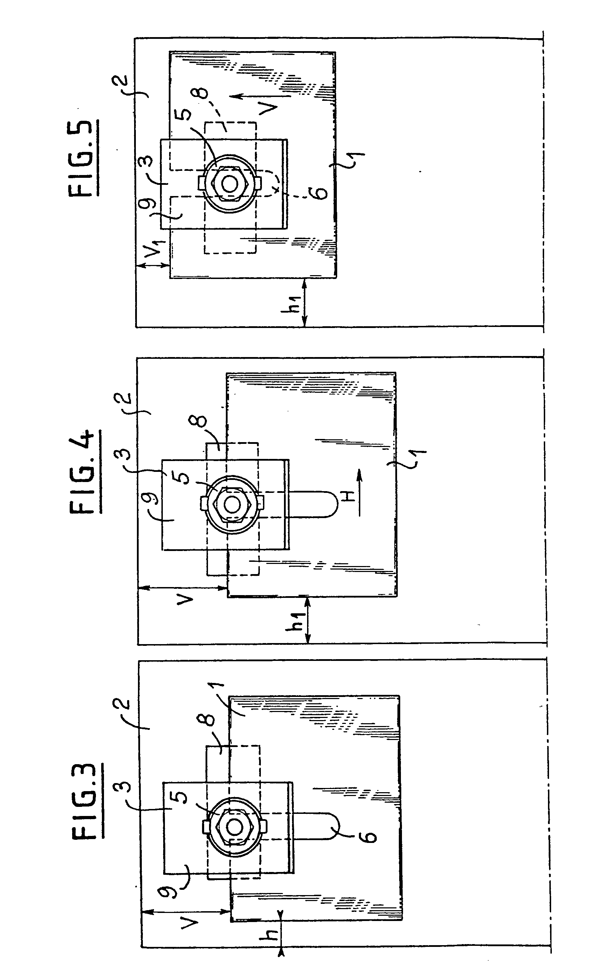

Pour effectuer le montage du dispositif selon l'invention, il faut tout d'abord associer à chaque cage coulissante 3 une vis 4 munie de son écrou à embase 5, comme cela a été expliqué précédemment. On doit ensuite équiper chaque boutonnière rectangulaire 8 de l'élément support 2 d'une cage coulissante 3 avec sa vis 4 et l'écrou à embase 5. Pour cela, on présente la cage coulissante 3 comme cela est représenté sur la figure 2 en face de la boutonnière rectangulaire 8 correspondante, les deux méplats 32 étant parallèles aux côtés longitudinaux de la boutonnière rectangulaire 8. On introduit alors la cage 10 dans a boutonnière rectangulaire, et on effectue un quart de tour de manière que les tétons 25 viennent s'appuyer sur l'élément support sous l'action des oreillettes souples 17. Le sens de ce quart de tour et la limite de ce quart de tour sont donnés par les butées de détrompage 18. On effectue alors le montage de l'élément à fixer 1 comme cela est représenté sur les figures 3, 4 et 5. On engage tout d'abord l'élément à fixer 1 à l'intérieur des pinces 9 des cages coulissantes 3, l'échancrure 6 ayant une largeur suffisante pour entourer la tige 26 de la vis 4. On obtient alors une première position provisoire de l'élément à fixer 1 avec une position horizontale représentée par la cote h et une position verticale représentée par la cote v. On effectue alors le réglage dans le sens horizontale H de manière à obtenir la cote voulue h1. Pour cela on déplace l'ensemble de la cage coulissante avec l'élément à fixer dans le sens longitudinal de la boutonnière rectangulaire 8. On effectue ensuite un deuxième réglage dans le sens perpendiculaire V afin d'obtenir la cote voulue $v_1$. Pour cela on fait glisser l'élément à fixer 1 à l'intérieur de la cage coulissante 3 au moyen de l'échancrure 6. Après qui l'on ait obtenu la position désirée de l'élément à fixer 1, on effectue le blocage de chacun des écrous à embase 5.

**Revendications**

1. Arrangement d'un élément à fixer (1) sur un élément support (2), comprenant au moins une cage coulissante (3) qui vient se fixer dans une boutonnière rectangulaire (8) dudit élément support (2) par l'intermédiaire d'un moyen de blocage solidaire de ladite cage coulissante (3), afin que ladite cage coulissante (3) puisse se déplacer dans le sens longitudinal de ladite boutonnière rectangulaire (8); ladite cage coulissante (3) ayant une pince (9), caractérisé en ce que ladite pince (9) reçoit l'élément à fixer (1), ledit élément à fixer (1) étant muni d'une échancrure (6) perpendiculaire à la boutonnière rectangulaire (8), ladite échancrure coopérant avec le moyen de blocage afin de permettre le déplacement dudit élément à fixer (1) dans le sens longitudinal de l'échancrure (6); le moyen de blocage étant une vis (4) avec un écrou à embase (5), ladite vis (4) ayant une tête cylindrique (24) munie de deux tétons (25) qui coopèrent avec la cage coulissante (3); lesdits tétons (25) ayant des dimensions suffisantes pour venir s'appliquer sur l'élément support (2), après franchissement de la boutonnière rectangulaire (8), et rotation d'un quart de tour; la cage coulissante (3) comportant: ladite pince (9) qui est constituée d'une semelle (11) et d'un élément élastique (13) liés l'un à l'autre un coude (12), ledit élément élastique (13) ayant une lumière (27, 28, 31),

une cage (10) montée sue la semelle (11) et recevant la tête cylindrique (24).

2. Arrangement selon la revendication 1, caractérisé en ce que:
la cage (10) comporte deux montants (16) ayant des parois internes cylindriques (21), lesdits montants étant reliés par un fond (29), afin de constituer deux ouvertures (19), qui coopèrent avec les deux tétons (25);
la semelle (11) a une lumière (20) avec deux encoches rectangulaires (22) qui prolongent les deux ouvertures (19) correspondantes.

3. Arrangement selon la revendication 2, caractérisé en ce que le fond (29) est constitué par des oreillettes souples (17).

4. Arrangement selon la revendication 2, caractérisé en ce que les montants (16) ont chacun une butée de détrompage (18).

5. Arrangement selon la revendication 2, caractérisé en ce que chaque encoche rectangulaire (22) a une partie en biseau (23).

6. Arrangement selon la revendication 1, caractérisé en ce que l'élément élastique (13) se prolonge par une extrémité (14) afin de constituer une arête de pincement (15).

7. Arrangement selon la revendication 1, caractérisé en ce que l'élément élastique (13) a une lumière (27), qui est débouchante et qui a une forme rectangulaire qui permette le passage de la vis de l'écrou à embase (5).

8. Arrangement selon la revendication 1, caractérisé en ce que l'élément élastique (13) a une lumière (28), qui a une partie cylindrique pour permettre le passage de l'embase de l'écrou (5) et deux lumiéres axiales (30) pour permettre le passage des tétons (25) de la vis (4).

9. Arrangement selon la revendication 1, caractérisé en ce que l'élément élastique (13) possède une lumière (31), qui est rectangulaire et qui permette le passage de l'écrou à embase (5).

**Patentansprüche**

1. Anordnung zur Befestigung eines Teils (1) an einem Halteteil (2), mit wenigstens einer Klammer (3), die in einer rechtwinkligen Aussparung (8) des Halteteils (2) feststellbar ist mittels einer mit der Klammer (3) fest verbundenen Feststelleinrichtung, wobei die Klammer (3) in Längsrichtung der rechtwinkligen Aussparung (8) verschiebbar ist und wobei die Klammer (3) ein Klemmteil (9) aufweist, dadurch gekennzeichnet, daß das Klemmteil (9) das zu befestigende Teil (1) aufnimmt, daß das zu befestigende Teil (1) mit einem Ausschnitt (6) versehen ist, der senkrecht zur rechtwinkligen Aussparung (8) verläuft, wobei der Ausschnitt mit einer Feststelleinrichtung dahingehend zusammenwirkt, daß eine Verschiebung des zu befestigenden Teils (1) in Längsrichtung des Ausschnitts (6) ermöglicht wird; die Feststelleinrichtung besteht aus einer Schraube (4) mit einer Flanschmutter (5), wobei die Schraube (4) einen zylindrischen Kopf (24) aufweist, der mit zwei Vorsprüngen (25) versehen ist, die mit der Klammer (3) zusammenwirken; die Vorsprünge (25) weisen ausreichende Abmessungen auf, um sich auf dem Halteteil (2) abzustützen, nach Freigabe der rechtwinkligen Aussparung (8) und einer Vierteldrehung; dabei weist die Klammer (3) auf:

das Klemmteil (9), das aus einem Steg (11) und einem elastischen Bauteil (13) besteht, die miteinander über ein Bogenstück (12) verbunden sind, wobei das elastische Bauteil (13) eine Öffnung (27, 28, 31) aufweist;

und eine Hülse (10), die auf dem Steg (11) angeordnet ist und den zylindrischen Kopf (24) aufnimmt.

2. Anordnung nach Anspruch 1, dadurch gekennzeichnet, daß

die Hülse (10) zwei Stützen (16) mit zylindrischen Innenwänden (21) aufweist, wobei die Stützen über einen Boden (29) miteinander verbunden sind und zwei Öffnungen (19) bilden, die mit den beiden Vorsprüngen (25) zusammenwirken und daß

der Steg (11) eine Aussparung (20) mit zwei rechtwinkligen Kerben (22) aufweist, welche die entsprechenden Öffnungen (19) verlängern.

3. Anordnung nach Anspruch 2, dadurch gekennzeichnet, daß der Boden (29) aus weichen Laschen (17) besteht.

4. Anordnung nach Anspruch 2, dadurch gekennzeichnet, daß die Stützen (16) jeweils mit einem Anschlag (18) versehen sind.

5. Anordnung nach Anspruch 2, dadurch gekennzeichnet, daß jede rechtwinklige Kerbe (22) mit einem abgeschrägten Abschnitt (23) versehen ist.

6. Anordnung nach Anspruch 1, dadurch gekennzeichnet, daß das elastische Bauteil (13) an einem Ende (14) verlängert ist, um so eine Klemmkante (15) zu bilden.

7. Anordnung nach Anspruch 1, dadurch gekennzeichnet, daß das elastische Bauteil (13) eine Öffnung (27) aufweist, die hervorspringt und die eine rechtwinklige Form aufweist zur Aufnahme der Schraube der mit einem Flansch versehenen Mutter (5).

8. Anordnung nach Anspruch 1, dadurch gekennzeichnet, daß das elastische Bauteil (13) eine Öffnung (28) aufweist, mit einem zylindrischen Abschnitt zur Aufnahme des Flansches der Mutter (5) und zwei axiale Öffnungen (30) aufweist zur Aufnahme der Vorsprünge (25) der Schraube (4).

9. Anordnung nach Anspruch 1, dadurch gekennzeichnet, daß das elastische Bauteil (13) eine Öffnung (31) aufweist, die rechtwinklig ist zur Aufnahme der mit dem Flansch versehenen Mutter (5).

**Claims**

1. An arrangement of an element (1) to be fixed to a support element (2) comprising at least one slidable cage (3) which comes to be fixed in a rectangular slot (8) in said support element (2) by way of a locking means which is fixed with respect to said slidable cage (3) in order that said slidable cage (3) can be displaced in the longitudinal direction of said rectangular slot (8); said slidable cage (2) having a gripping means (9) characterised in that said gripping means (9) receives the element (1) to be fixed, said element (1) to be fixed being provided with a notch (6) perpendicular to the rectangular slot (8), said notch co-operating with the locking means in order to permit displacement of said element (1) to be fixed in the longitudinal direction of the notch (6); the locking means being a screw (4) with a collar nut (5), said screw (4) having a cylindrical head (24) provided with two lugs (25) which co-operate with the slidable cage (3); said lugs (25) being of sufficient dimensions to come to bear against the support element (2) after passing through the rectangular slot (8) and after a rotational movement through a quarter of a turn; the slidable cage (3) comprising:

said gripping means (9) which is formed by a base portion (11) and a resilient element (13) which are connected together by a bend portion (12), said resilient element (13) having an opening (27, 28, 31), and

a cage (10) mounted on the base portion (11) and receiving the cylindrical head (24).

2. An arrangement according to claim 1 characterised in that:

the cage (10) comprises two uprights (16) having cylindrical internal walls (21), said uprights being connected by a bottom portion (29) in order to form two openings (19) which co-operate with the two lugs (25); and

the base portion (11) has an opening (20) with two rectangular cut-outs (22) which extend the two corresponding openings (19).

3. An arrangement according to claim 2 characterised in that the bottom portion (29) is formed by flexible lug portions (17).

4. An arrangement according to claim 2 characterised in that the uprights (16) each have an alignment abutment (18).

5. An arrangement according to claim 2 characterised in that each rectangular notch (22) has a bevel portion (23).

6. An arrangement according to claim 1 characterised in that the resilient element (13) is extended by an end (14) in order to form a gripping edge (15).

7. An arrangement according to claim 1 characterised in that the resilient element (13) has an opening (27) which is an open opening and which is of a rectangular shape which permits the screw of the collar nut (5) to pass therethrough.

8. An arrangement according to claim 1 characterised in that the resilient element (13) has an opening (28) which has a cylindrical portion to permit the collar of the nut (5) to pass therethrough and two axial openings (30) to permit the lugs (25) of the screw (4) to pass therethrough.

9. An arrangement according to claim 1 characterised in that the resilient element (13) has an opening (31) which is rectangular and which permits the collar nut (5) to pass therethrough.

## FIG.1

## FIG.2

EP 0 242 486 B1

## FIG.3

## FIG.4

## FIG.5

EP 0 242 486 B1

FIG.6

FIG.7

FIG.8

FIG.9

3